# EUROPÄISCHE PATENTSCHRIFT

(11) **EP 2 989 877 B1**
(45) Veröffentlichungstag und Bekanntmachung des Hinweises auf die Patenterteilung: **15.02.2017**
(21) Anmeldenummer: 15177711.7
(22) Anmeldetag: 21.07.2015
(51) Int. Cl.: A01C 7/04

(54) **DOSIERAGGREGAT FÜR KÖRNIGES GUT**
DOSING ASSEMBLY FOR GRANULAR MATERIAL
GROUPE DE DOSAGE POUR MATÉRIAU GRANULAIRE

(30) Priorität: 18.08.2014 DE 102014111777
(43) Veröffentlichungstag der Anmeldung: 02.03.2016
(73) Patentinhaber: Horsch Maschinen GmbH, 92421 Schwandorf (DE)
(72) Erfinder: HASELHOFF, Alexander, 92421 Schwandorf (DE)
(74) Vertreter: Benninger, Johannes

(56) Entgegenhaltungen:
- WO-A1-2013/186175
- DE-A1- 3 831 042
- US-B1- 7 228 807

## Beschreibung

Die vorliegende Erfindung betrifft ein Dosieraggregat für körniges Gut mit den Merkmalen des unabhängigen Anspruchs.

Neben sog. Einzelkornsäaggregaten sind volumetrisch arbeitende Verteilvorrichtungen für körniges Gut bzw. Sävorrichtungen in zahlreichen Ausführungsvarianten bekannt. Hierbei kann die Kornförderung insbesondere mittels eines tragenden Luftstromes erfolgen. Die Zudosierung der Körner in den Luftstrom ermöglicht die Variation des Volumenstroms an ausgebrachten Körnern. Dennoch erfolgt die Kornablage an den Säscharen oftmals ungleichmäßig, da sowohl die Exaktheit der Korndosierung als auch die Regulierung des Luftstroms nur begrenzt beeinflussbar sind, was zu Nachteilen bei der Standraumzuteilung der einzelnen Pflanzen führen kann.

Eine für unterschiedliche Korngrößen und Samenarten universell einsetzbare Vorrichtung zum Vereinzeln und Abgeben von körnigem Gut ist aus der DE 36 33 955 A1 bekannt. Hierzu wird ein rotierender schmaler Hohlzylinder mit Zellen bildenden Aussparungen an seiner offenen Stirnseite, einer feststehenden äußeren Abdeckung und einem innerhalb des Hohlzylinders angeordneten Abdeckring vorgeschlagen. Ein Vorratsbehälter ist durch eine Wand vom Hohlzylinder abgetrennt, die eine Öffnung zum Durchtritt einer begrenzten Menge an zu vereinzelndem Gut aufweist. Eine Länge der die Zellen bildenden Aussparungen soll ein Zwei- oder Mehrfaches der Länge der zu vereinzelnden Körner betragen. Zudem ist nahe einer hinteren Begrenzungsfläche der Aussparungen eine Saugöffnung vorgesehen. Der schnell rotierende Hohlzylinder nimmt einige Körner je Aussparung aus dem Körnervorrat auf, wobei die äußere Abdeckung die Aussparungen in der Befüllzone abdeckt und verhindert, dass die Körner herausfallen. Die Fliehkraft drückt die Körner in die Aussparungen, während ein Bürstenabstreifer für das Abstreifen überschüssiger Körner sorgt, die in den Vorrat zurückfallen. Im weiteren Bewegungsverlauf des Hohlzylinders endet eine äußere Begrenzungswand, so dass nicht vom Saugdruck festgehaltene Körner in den Aussparungen durch Fliehkräfte nach außen abgegeben werden und in den Vorrat zurückgeleitet werden. Ein zusätzlicher pneumatischer Abstreifer kann diese Korneinzelung unterstützen. Am Abgabeort wird der Unterdruck abgeschnitten, so dass die Körner aus den Aussparungen durch Fliehkraft und Schwerkraft abgegeben werden.

Weiterhin offenbart die EP 0 636 306 A1 ein Verteilaggregat für körniges Gut wie Saatgut. Das Verteilaggregat umfasst ein Gehäuse mit kreisbahnförmiger Innenmantelfläche, einer Einlassöffnung für körniges Gut, einer im Gehäuse konzentrisch rotierenden Fördereinrichtung für das körnige Gut, sowie einer Auslassöffnung. Die Fördereinrichtung weist mehrere Öffnungen an ihrem Außenbereich auf, die in einem ersten Gehäusebereich mit der Gehäuseinnenmantelfläche eine Tasche bilden, in der die Körner gedrängt werden und durch Zentrifugalkräfte, unterstützt durch die Fördereinrichtung, kreisförmig befördert werden. In einen zweiten Gehäusebereich mündet die Einlassöffnung. Der erste Gehäusebereich und der zweite Gehäusebereich sind durch eine fest stehende, konturierte Scheibe getrennt. Die Kontur der Scheibe soll dafür sorgen, dass überschüssige Körner abgestreift werden, die in den Taschen der Fördereinrichtung transportiert werden. Diese Körner stehen einer erneuten Förderung zur Verfügung.

Bei den genannten Dosiereinrichtungen handelt es sich entweder um modifizierte Einzelkornsäaggregate, die zwar eine präzise Kornvereinzelung erlauben, die aber gegenüber volumetrisch dosierenden Drillmaschinen in ihrer Verarbeitungskapazität und in ihrem Kornvolumenstrom begrenzt sind und/oder in ihrem Aufbau und ihrer Funktion relativ aufwändig und störanfällig sind. Die bekannt gewordenen Zusatzgeräte, welche die regelmäßige Abgabe der Saatkörner bei volumetrisch dosierenden Maschinen verbessern sollen, reichen hingegen nicht an die Vereinzelungsqualität herkömmlicher Einzelkornsäaggregate heran.

Schließlich offenbart die WO 2013/186175 A1 ein Verteilaggregat für körniges Gut, das insbesondere als Säaggregat in einer Sämaschine eingesetzt werden kann. Dieses bekannte Aggregat umfasst ein Gehäuse mit annähernd kreisbahn- und/oder kreissegmentförmiger Innenmantelfläche. Im Gehäuse rotiert konzentrisch eine scheibenförmige Fördereinrichtung für das beförderte körnige Gut bzw. die beförderten Samenkörner. Eine Auslassöffnung schließt sich annähernd tangential an die Innenmantelfläche des Gehäuses an. Die scheibenförmige Fördereinrichtung weist Öffnungen oder Absätze an ihrem Außenumfang auf, die im Zusammenhang mit der Rotation der Scheibe und dem Luftstrom für kreisförmige Bewegungen der Körner entlang der Innenmantelfläche sorgen. In einem Vereinzelungsbereich verbleibt durch eine angepasste Kontur der Innenmantelfläche des Gehäuses und unter Einfluss von Zentrifugalkräften nur noch jeweils ein einzelnes Korn in der Öffnung bzw. im Absatz der scheibenförmigen Fördereinrichtung, während überschüssige Körner abgesondert und zur erneuten Förderung in den ersten Gehäusebereich zurück geführt werden.

Das zuletzt genannte Säaggregat hat sich in der Praxis bewährt und ermöglicht eine präzise Kornvereinzelung bei volumetrischer Kornförderung, erfordert jedoch eine exakte Anpassung der umfangsseitigen Ausnehmungen oder Öffnungen der rotierenden Förderscheibe an die jeweils beförderten und auszusäenden Kornsorte. Bei relativ kleinen Körnern, die in zu groß dimensionierten Öffnungen befördert werden, ist eine exakte Vereinzelung kaum möglich, da in jeder Öffnung oftmals zwei, drei oder mehr Körner befördert und gleichzeitig durch die Auslassöffnung abgegeben werden. Sind dagegen die Öffnungen oder Ausnehmungen zu klein, versagt das Vereinzelungsaggregat völlig und gibt die Körner ebenso unregelmäßig ab, wie sie zuvor in die Einlassöffnung hineintransportiert wurden. Um diese Probleme zu vermeiden, ist es in der Praxis unumgänglich, die im Gehäuse rotierende Förderscheibe bei einem Wechsel des Saatgutes auszutauschen und gegen jeweils passende Scheiben auszuwechseln. Da eine vielreihige Sämaschine für jede Säschar ein separates Dosieraggregat der beschriebenen Bauart aufweist, sind entsprechend viele Sätze von auswechselbaren Dosierscheiben erforderlich, was nicht nur Kosten verursacht, sondern auch einen hohen Logistikaufwand beim jeweiligen Anwender erfordert.

Weiter offenbart die DE 38 31 042 A1 eine Vorrichtung zur axialen Verstellung eines drehbaren Maschinenteils gegenüber einem ortsfesten Maschinenkörper. Am ortfesten Maschinenkörper ist eine Gewindehülse verdrehbar angeordnet. Dabei ist ein Lager des drehbaren Maschinenteils durch eine Außenschale axial festgelegt, wobei die Innenschale des Lagers auf dem drehbaren Maschinenteil festgelegt ist. Für die axiale Einstellung der Vorrichtung kann ein Einstellschlüssel an der Angriffsfläche angesetzt werden. Zum Lösen einer Arretierschraube kann die Hülse im Maschinenteil verdreht werden, wodurch ihre axiale Verstellbewegung bewirkt wird. Eine axiale Verstellmöglichkeit eines Zellenrades ist außerdem auch in der DE 195 44 237 A1 offenbart.

Ein vorrangiges Ziel der Erfindung besteht darin, diese Nachteile zu vermeiden und bei Dosieraggregaten der Bauart, wie sie in der WO 2013/186175 A1 beschrieben sind, eine einfach und kostengünstig realisierbare Anpassbarkeit der rotierenden Dosierscheiben bzw. deren Zusammenwirkung mit entsprechenden Gegenflächen im Gehäuse an unterschiedliche Korngrößen und/oder -konturen zu ermöglichen. Insbesondere sollen sich die Dosieraggregate ohne größeren logistischen Aufwand für unterschiedliche Kornarten, -größen und/oder -konturen verwenden lassen, so dass beim Ausbringen unterschiedlicher Kornarten, -größen und/oder -konturen jeweils die bestmögliche Vereinzelungsqualität erreichbar ist. Damit soll weiterhin die erreichbare Abgabegenauigkeit und/oder die Kornabstände bei einer volumetrischen Kornförderung in einem Maße aufrechterhalten werden, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht sein soll, und dies vorzugsweise mit einem weiterhin einfachen und gegen Störungen wenig anfälligen Aufbau und einer einfachen Funktion, wie er/sie für volumetrisch dosierende Drillmaschinen charakteristisch ist.

Diese genannten Ziele der Erfindung werden mit dem Gegenstand des unabhängigen Anspruchs 1 erreicht. Merkmale vorteilhafter Weiterbildungen der Erfindung ergeben sich aus den abhängigen Ansprüchen. Zur Erreichung des genannten Ziels schlägt die Erfindung ein Dosieraggregat für körniges Gut wie Samenkörner, Dünger o. dgl. vor, die eine in etwa konzentrisch zu einer annähernd kreisbahn- und/oder kreissegmentförmigen Innenmantelfläche eines Gehäuses rotierende Förderscheibe aufweist, die mit einem Antriebsmotor angetrieben ist. Der Antriebsmotor kann bspw. ein Elektromotor oder ein hydrostatischer Antrieb o. dgl. sein. Auch andere Varianten eines Antriebsmotors kommen grundsätzlich in Frage. Die Förderscheibe weist wenigstens einen Absatz oder wenigstens eine Aussparung an ihrem Umfang oder Außenumfang zur Aufnahme wenigstens eines zu separierendes Kornes über mindestens einen Umlauf der Förderscheibe auf. Der wenigstens eine Absatz oder die wenigstens eine Aussparung bildet in Zusammenwirkung mit einer nutförmigen und/oder schrägen Konturierung der Innenmantelfläche eine Fördertasche zur Förderung eines Korns oder mehrerer Körner in Richtung zu einer sich ungefähr tangential an die Innenmantelfläche anschließenden Auslassöffnung. Zur Variation eines axialen Abstandes zur Innenmantelfläche und/oder einer Breite der Fördertasche in axialer Richtung ist die mit dem Antriebsmotor drehfest verbundene Förderscheibe in axialer Richtung des Antriebsmotors verstellbar. Zu diesem Zweck kann insbesondere der gesamte Antriebsmotor mitsamt der drehfest verbundenen Förderscheibe innerhalb des Gehäuses in axialer Richtung zu seiner Drehachse verstellt oder verschoben werden, wodurch auch die damit gekoppelte Förderscheibe innerhalb des Gehäuses verschoben wird. Mit dieser Verschiebung ändert sich eine Spaltgröße zwischen einem abgeschrägten Rand der Förderscheibe und einer entsprechenden Gegenfläche an der Innenmantelfläche des Gehäuses, in dem die Förderscheibe rotiert, wodurch wiederum eine Anpassbarkeit an verschiedene Korngrößen gegeben ist.

Wahlweise kann der Antriebsmotor innerhalb des Dosieraggregats motorisch - z.B. elektromotorisch - oder manuell in seiner Position verstellt werden. Eine elektromotorische Verstellung kann einen kleinen Servomotor umfassen, der bspw. über eine Zahnrad-Schneckenrad-Übersetzung eine präzise Verstellbarkeit erlaubt. Auch andere Antriebsvarianten sind hierbei denkbar. Vorzugsweise sieht die Verstelleinheit für die axiale Verstellung der Position des Antriebsmotors im Gehäuse eine Selbsthemmung vor, was z.B. bei der genannten Zahnrad-Schneckenrad-Übersetzung oder auch bei einer Verstelleinheit mit einem Spindelantrieb gegeben sein kann.

Eine weitere Variante des erfindungsgemäßen Dosieraggregats sieht vor, dass mehrere solcher gleichartigen Dosieraggregate mit einer zentralen Steuereinheit gekoppelt und unabhängig voneinander oder gemeinsam verstellbar sind. Auf diese Weise kann z.B. von einem Fahrerstand einer Sämaschine eine zentrale Verstellung aller Dosieraggregate der Sämaschine oder auch eine gezielte Verstellung einzelner Dosieraggregate erfolgen.

Bei dem Dosieraggregat mit der darin rotierenden Förderscheibe kann es sich insbesondere um ein Aggregat der Bauart handeln, wie es in der WO 2013/186175 A1 beschrieben ist. Die Erfindung liefert für solche Dosieraggregate eine einfache und kostengünstige Anpassung an unterschiedliche Korngrößen und/oder Kornkonturen. Insbesondere kann durch die Verstellbarkeit der Antriebseinheit auf einfache Weise das mit der elektrischen Antriebseinheit gekoppelte Dosierrad mit sehr geringem Aufwand an unterschiedliche Kornarten, -größen und/oder -konturen angepasst werden, ohne dass eine Umrüstung erforderlich ist oder ohne dass jeweils die kompletten Förderscheiben ausgewechselt werden müssen. Durch die verstellbare Spaltgröße kann beim Ausbringen unterschiedlicher Kornarten, -größen und/oder -konturen jeweils die bestmögliche Vereinzelungsqualität sichergestellt werden. Damit können zudem die jeweils realisierbare Abgabegenauigkeit und/oder die zu realisierenden Kornabstände bei einer volumetrischen Kornförderung in einem Maße aufrechterhalten werden, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht werden kann. Gleichzeitig werden damit Dosieraggregate zur Verfügung gestellt, die einfach aufgebaut und kaum gegen Störungen anfällig sind.

Das genannte und insbesondere aus der WO 2013/186175 A1 bekannte Dosieraggregat für körniges Gut wie Samenkörner, Dünger o. dgl. ist mit einem innerhalb eines Gehäuses des Dosieraggregats und in etwa konzentrisch zu einer annähernd kreisbahn- und/oder kreissegmentförmigen Innenmantelfläche des Gehäuses rotierenden Förderscheibe ausgestattet, die wenigstens einen Absatz oder eine Aussparung an ihrem Umfang bzw. am Außenumfang zur Aufnahme wenigstens eines zu separierendes Kornes über mindestens einen Umlauf der Förderscheibe aufweist. Der wenigstens eine Absatz oder die wenigstens eine Aussparung bildet in Zusammenwirkung mit einer nutförmigen Konturierung der Innenmantelfläche eine Fördertasche zur Förderung eines Korns oder mehrerer Körner in Richtung zu einer sich ungefähr tangential an die Innenmantelfläche anschließenden Auslassöffnung.

Gemäß der Erfindung ist vorgesehen, dass sich der wenigstens eine Absatz oder die wenigstens eine Aussparung am Außenumfang der Förderscheibe in ihrem Abstand zu einer entsprechenden nutförmigen Gegenfläche an der Innenmantelfläche des Gehäuses verstellen lässt. Gemäß dieser Ausprägung kann sich ein Spalt mit einer definierten Spaltgröße ergeben. Die Einstellmöglichkeit des Spalts kann durch die Justierung der Motoreinheit in axialer Verstellrichtung erfolgen. Die Regulierung des Abstandes zwischen der Förderscheibe und der Gegenfläche der Innenmantelfläche des Gehäuses kann mit geringem Aufwand vorgenommen werden, so dass der Spalt an die verschiedensten Korngrößen -größen und/oder -konturen anpassbar ist. Ein separates Umrüsten des Dosieraggregats, wie bereits eingangs beschrieben, ist nicht mehr erforderlich. Das System kann somit flexibel an die jeweiligen Korngrößen und/oder -konturen angepasst werden und gleichzeitig die geforderte Qualität der Abgabegenauigkeit und/oder die zu realisierenden Kornabstände bei einer volumetrischen Kornförderung aufrechterhalten. Auf diese Weise kann sich die Korndosierung hinsichtlich ihrer Vereinzelungsqualität einer Einzelkorndosierung annähern oder diese im Idealfall sogar erreichen. Gleichzeitig lässt sich mit dem System auch ein hoher Kornvolumenstrom realisieren.

Eine Weiterbildung der Erfindung sieht vor, dass wenigstens ein Absatz oder die wenigstens eine Aussparung an parallel verlaufenden bzw. ineinander übergehenden Flächen und/oder über einen definierten Winkel einstellbar ist, wobei sich der wenigstens eine Absatz oder die wenigstens eine Aussparung durch den Außenumfang der Förderscheibe in Bezug auf die nutförmige Gegenfläche an der Innenmantelfläche des Gehäuses ergibt. Anhand dieser Ausführungsformen wird ersichtlich, dass der Spalt zur Förderung des Korngutes über verschiedenste konstruktive Ausgestaltungen ausgebildet sein kann. Bei den parallel und/oder schräg verlaufenden Varianten entspricht die Kontur der Förderscheibe exakt bzw. annähernd der Kontur der Gegenfläche der Innenmantelfläche des Gehäuses. Die Einstellung des Spalts bzw. des wenigstens einen Absatzes oder der wenigsten einen Aussparung am Außenumfang der Förderscheibe in Bezug auf die nutförmigen Gegenfläche an der Innenmantelfläche des Gehäuses über eine Ecke weist in der Regel einen definierten Winkel auf. Vorzugweise entspricht der definierten Winkel einen Wert von 90°. Denkbar ist jedoch, dass der Winkel über das Eckprofil auch jegliche andere Werte annehmen kann.

Die Erfindung liefert für solche Dosieraggregate eine einfache und kostengünstige Anpassung an unterschiedliche Korngrößen und/oder Kornkonturen. Insbesondere kann durch die Verstellbarkeit der Antriebseinheit auf einfache Weise das mit der elektrischen Antriebseinheit gekoppelte Dosierrad mit sehr geringem Aufwand an unterschiedliche Kornarten, -größen und/oder -konturen angepasst werden, ohne dass eine Umrüstung erforderlich ist oder ohne dass jeweils die kompletten Förderscheiben ausgewechselt werden müssen. Durch die verstellbare Spaltgröße kann beim Ausbringen unterschiedlicher Kornarten, -größen und/oder -konturen jeweils die bestmögliche Vereinzelungsqualität sichergestellt werden. Damit können zudem die jeweils realisierbare Abgabegenauigkeit und/oder die zu realisierenden Kornabstände bei einer volumetrischen Kornförderung in einem Maße aufrechterhalten werden, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Ansicht eines Dosieraggregats mit einer in einem Gehäuse rotierenden Förderscheibe.
Fig. 2 zeigt insgesamt vier weitere Ansichten des Dosieraggregats.
Fig. 3 zeigt drei Detailansichten eines verstellbaren Spaltes zwischen der rotierenden Förderscheibe und einer Innenmantelfläche des Gehäuses des Dosieraggregats.
Fig. 4 zeigt drei weitere Detailansichten eines verstellbaren Spalts zwischen der rotierenden Förderscheibe und einer Innenmantelfläche des Gehäuses des Dosieraggregats.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

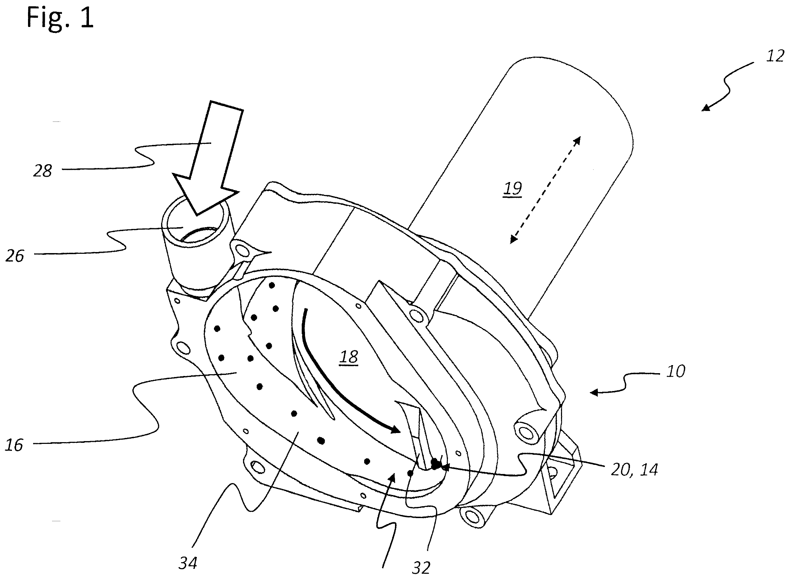

Die nachfolgend anhand der Figuren 1 bis 3 beschriebene Erfindung umfasst eine innerhalb eines Gehäuses 10 eines Dosieraggregats 12 für körniges Gut wie Samenkörner 14, Dünger o. dgl. und in etwa konzentrisch zu einer annähernd kreisbahn- und/oder kreissegmentförmigen Innenmantelfläche 16 des Gehäuses 10 rotierende Förderscheibe 18, die wenigstens einen Absatz oder eine Aussparung 20 am Außenumfang 22 zur Aufnahme wenigstens eines zu separierendes Kornes 14 über mindestens einen Umlauf der Förderscheibe 18 aufweist. Die Abstände der Scheibe 18 von einer Gegenfläche der Innenmantelfläche 16 des Gehäuses 10 können durch Verstellung einer Motoreinheit 19 (angedeutet durch den Doppelpfeil in Fig. 1) variiert werden.

Bei dem Dosieraggregat 12, in dem die Förderscheibe 18 rotiert, kann es sich insbesondere um ein Aggregat der Bauart handeln, wie es in der WO 2013/186175 A1 beschrieben ist. Die schematische Perspektivansicht der Fig. 1 verdeutlicht den Aufbau eines solchen Dosieraggregats 12, das insbesondere als Säaggregat einer Verteil- oder Sämaschine dienen kann. Das Dosieraggregat 12 umfasst ein Gehäuse 10 mit einer zumindest abschnittsweise annähernd kreisbahn- und/oder kreissegmentförmigen Innenmantelfläche 16 und einer Einlassöffnung 26 für eine Luftströmung 28 und darin befördertem körnigen Gut oder beförderten Samenkörnern 14. Weiterhin umfasst das Dosieraggregat 12 die im Gehäuse 10 konzentrisch rotierende Förderscheibe 18 für das in der Luftströmung 28 getragene körnige Gut bzw. die darin beförderten Samenkörner sowie eine in der Fig. 1 nicht deutlich erkennbare Auslassöffnung, die annähernd tangential an die Innenmantelfläche 16 anschließt und die Samenkörner bzw. das körnige Gut weitgehend regelmäßig zu einer Saatleitung, einer Förderleitung o. dgl. abgibt. Im dargestellten Ausführungsbeispiel kann die Förderscheibe 18 eine, zwei oder mehrere regelmäßig voneinander beabstandete Mitnehmerstufen 32 sowie unmittelbar daran angeordnete Aussparungen 20 zur Mitnahme von körnigem Gut bzw. von Samenkörnern aufweisen.

Die im Luftstrom 28 getragenen Körner werden durch den gebogenen Einlauf der Einlassöffnung 26 in den Innenraum des Gehäuses 10 geführt, in dem die rotierende Förderscheibe 18 eine Art Dosiereinrichtung zur äquidistanten Abgabe der Körner in Richtung zum und aus dem Auslass bilden. Die Luftströmung 28 sorgt dafür, dass sich die Körner entlang der Innenmantelfläche 16 und zunächst entlang der gekrümmten Wandfläche 34 bewegen. Da die Innenmantelfläche 16 im weiteren Verlauf in Richtung der Auslassöffnung eine geneigte Gehäusefläche 36 oder eine anderweitig geformte nutförmige Struktur aufweist, deren Abmessungen ungefähr mit der Größe der einzelnen Körner korrespondieren kann, werden die Körner im weiteren Bewegungsverlauf zwischen der Wandfläche 34, entlang der geneigten Gehäusefläche 36 und in Richtung der Auslassöffnung zur Förderscheibe 18 gedrängt, wo jedoch zwischen der Stufe 32 und der geneigten Gehäusefläche 36 jeweils nur ein einzelnes Korn 14 Platz findet. Dies wird auch dadurch erreicht, dass sich die nutförmige Struktur oder geneigte Gehäusefläche 36 in Umdrehungsrichtung der Förderscheibe 18 in Richtung zur Auslassöffnung verjüngt. Da zudem die nutförmige Verjüngung der Innenmantelfläche 16 in Umdrehungsrichtung der Förderscheibe 18 tangential in der Auslassöffnung 30 mündet, werden jeweils einzelne Körner 14 in gleichmäßigen Abständen durch die Auslassöffnung abgegeben.

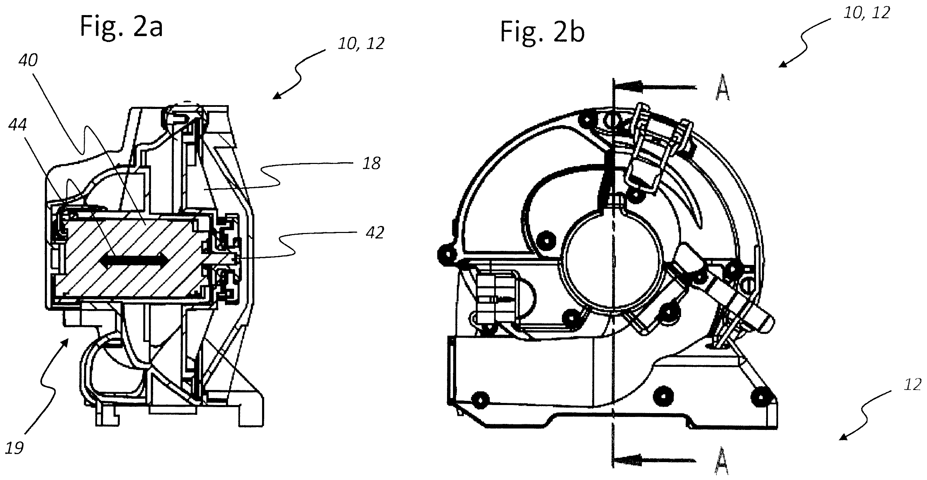

Die schematische Seitenansicht der Fig. 2b und der Längsschnitt der Fig. 2a entlang der Schnittlinie A-A aus Fig. 2b zeigen den Aufbau des Dosieraggregats 12 mit der rotierenden Förderscheibe 18, die mit der Motoreinheit 19 in Drehverbindung steht und von dieser in Rotation versetzt wird. Die Motoreinheit 19 umfasst im gezeigten Ausführungsbeispiel einen elektrischen Antriebsmotor 40, der ein zylindrisches Motorgehäuse und eine zur Förderscheibe 18 hin gerichtete Antriebswelle 42 aufweist. An der Antriebswelle 42 ist die Förderscheibe 18 lösbar, jedoch drehfest befestigt. Um die Förderscheibe 18 gegenüber dem Gehäuse 10 verstellen zu können, ist der Antriebsmotor 40 mitsamt der Antriebswelle 42 und damit der Förderscheibe 18 in axialer Richtung 44 verstellbar, bspw. mit einem geeigneten Spindelantrieb, der einen separaten Verstellmotor umfasst.

Dieser nicht näher ausgeführte separate Verstellmotor oder Verstellantrieb kann bspw. einen elektrischen Antrieb umfassen, kann jedoch auch andere Antriebsvarianten aufweisen. Auch der Antriebsmotor für die rotierende Dosierscheibe muss nicht zwingend durch einen Elektromotor gebildet sein. Auch andere Antriebsvariante kommen hierfür in Frage, bspw. ein Hydromotor o. dgl.

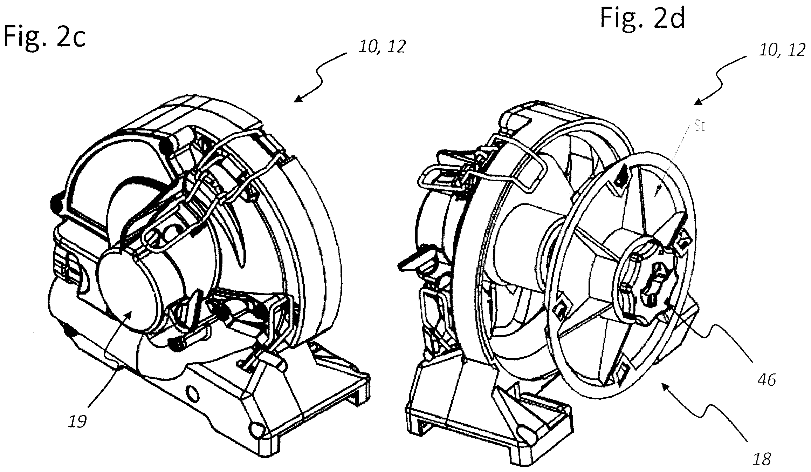

Die schematischen Perspektivansichten der Figuren 2c und 2d verdeutlichen nochmals den Aufbau einer Ausführungsvariante des erfindungsgemäßen Dosieraggregats 12. Die schematische Perspektivansicht der Fig. 2c zeigt das Dosieraggregat 12 von der Seite des Antriebes 19 her. Die schematische Perspektivansicht der Fig. 2d zeigt das Gehäuse 10 mit abgenommenem vorderem Deckel und die über einen Zentralverschluss 46 lösbare Förderscheibe 18. Ein solcher Zentralverschluss 46 kann zur Erleichterung einer schnellen Austauschbarkeit der Förderscheibe 18 gegen eine anders gestaltete Scheibe für anderes Saatgut sinnvoll sein.

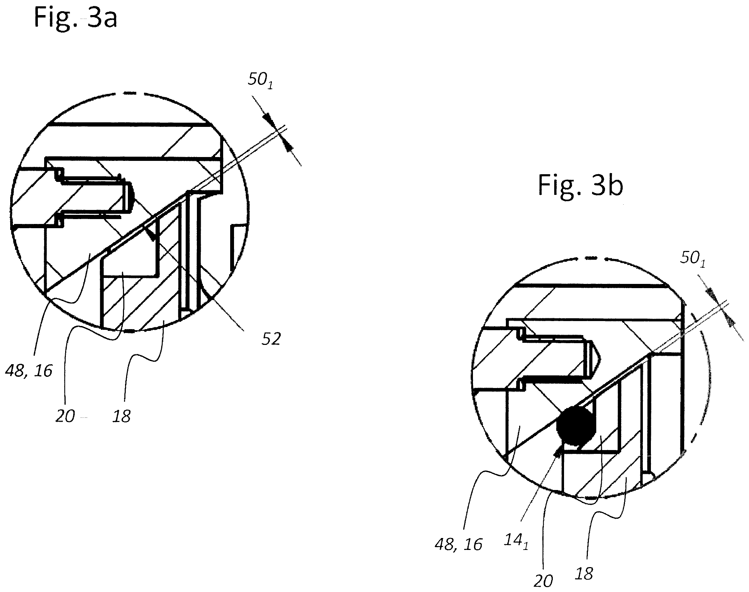

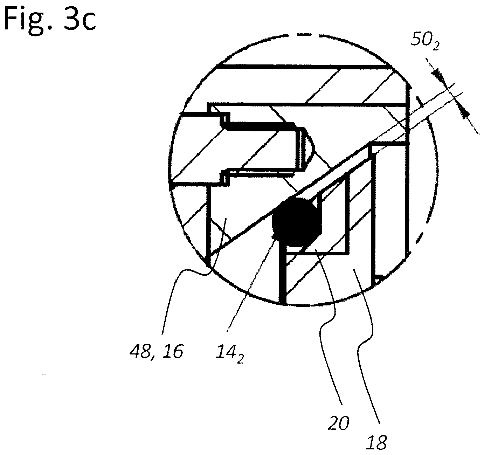

Die schematischen Detailschnitte der Fig. 3 zeigen unterschiedliche axiale Verstellzustände der Förderscheibe 18, deren Abstand von der Gegenfläche 48 der Innenmantelfläche 16 des Gehäuses 10 eine Spaltgröße 50 eines Spalts 52 definiert. Die Fig. 3b zeigt die Aufnahme eines Korns 14₁ mit einem ersten Durchmesser. Das Korn 14₁ befindet sich in einer Aussparung 20, wobei durch die Justierung der Motoreinheit 19 in axialer Verstellrichtung 44 eine erste Spaltgröße 50₁ eingestellt ist.

Die Fig. 3c zeigt die Aufnahme eines Korns 14₂ in der Aussparung 20 gleicher Größe mit einem zweiten Durchmesser, der größer ist als der erste Durchmesser des Korns 14₁ gemäß Fig. 3b. Das Korn 14₂ befindet sich auch hier in der Aussparung 20, wobei jedoch durch die Justierung der Motoreinheit 19 in axialer Verstellrichtung 44 eine größere zweite Spaltgröße 50₂ eingestellt ist, die größer ist als die erste Spaltgröße 50₁. Auf diese Weise kann durch einfache axiale Verstellung der Motoreinheit 19 eine schnelle Anpassung auf verschiedene Korngrößen 14₁, 14₂ erreicht werden.

Durch Veränderung der Spaltgröße 50 wird somit der resultierende Vereinzelungsraum des Dosieraggregats geändert, der den einzelnen Körnern durch die Größe der Aufnahme und deren Kontur jeweils zur Verfügung steht. Außerdem können in der gezeigten Weise Toleranzen ausgeglichen werden, sowohl hinsichtlich der Maßhaltigkeit der verschiedenen Bauteile des Aggregats 12 als auch der jeweils ausgesäten Korndurchmesser.

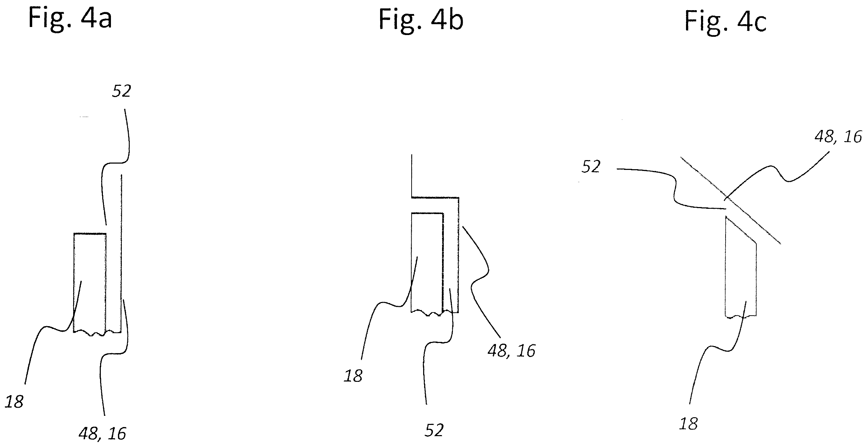

Weitere Möglichkeiten, einen Spalt 52 zwischen der rotierenden Förderscheibe 18 und einer Innenmantelfläche 16 des Gehäuses 10 des Dosieraggregats einzustellen, sind in den Figuren 4a bis 4c dargestellt. Die Figuren zeigen, dass und wie die Spaltgröße 50 bei verschiedensten konstruktiven Ausgestaltungen einstellbar ist.

Nach der Fig. 4a kann ein Spalt 52 zwischen zwei parallel zueinander ausgerichteten Flächen eingestellt werden. Bei diesen Flächen handelt es sich einerseits um die Innenmantelfläche bzw. Gegenfläche 16, 48 des Dosieraggregats und eine flache oder konturierte Stirnseite der Förderscheibe 18. Das Korn (hier nicht dargestellt) kann durch die zwei parallel zueinander ausgerichteten Flächen an zwei Seiten begrenzt werden, wobei die Spaltgröße 50 durch die Justierung der Motoreinheit in axialer Verstellrichtung einstellbar ist. Der Spalt 52 kann dadurch beliebig an die jeweiligen Korngrößen, und/oder -konturen angepasst werden. Neben der Anpassung an die verschiedensten Korngrößen und/oder -konturen durch eine Änderung des Spalts 52 erfolgt gleichzeitig auch eine Änderung des Vereinzelungsraums.

Alternativ kann der Spalt 52 über eine eckförmige Ausformung gemäß Fig. 4b eingestellt werden, wodurch das Korn zusätzlich von einer weiteren Seite begrenzt wird. In einer bevorzugten Ausführungsvariante kann das Korn auch um einen definierten Winkel, vorzugsweise von 90° geleitet werden. Alternativ kann der Winkel bzw. die Ecke auch andere Maße annehmen. Die Einstellung der Spaltgröße 50 erfolgt durch eine Justierung der Motoreinheit in axialer Verstellrichtung wie zuvor beschrieben.

In einer weiteren Ausführungsform gemäß Fig. 4c kann der Spalt 52 auch über eine schräge Fläche eingestellt werden. Der Spalt 52 ergibt sich zwischen der Innenmantelfläche bzw. Gegenfläche 16, 48 des Dosieraggregats und der Förderscheibe 18. Die Schräge der Innenmantelfläche bzw. Gegenfläche 16, 48 des Dosieraggregats entspricht exakt der Schräge der Förderscheibe 18. Auch in dieser Ausführungsform ist es möglich, den Spalt an die verschiedensten Korngrößen über die Justierung der Motoreinheit anzupassen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Gehäuse
- 12: Dosieraggregat
- 14: Korn, Saatkorn
- 16: Innenmantelfläche
- 18: Förderscheibe
- 19: Motoreinheit
- 20: Aussparung
- 22: Außenumfang
- 24: Einsatz
- 26: Einlassöffnung
- 28: Luftströmung
- 32: Mitnehmerstufe
- 34: Wandfläche
- 36: geneigte Gehäusefläche
- 40: Antriebsmotor
- 42: Antriebswelle
- 44: axiale Verstellrichtung
- 46: Zentralverschluss
- 48: Gegenfläche
- 50: Spaltgröße
- 52: Spalt

## Patentansprüche

1. Dosieraggregat (12) für körniges Gut wie Samenkörner (14), Dünger o. dgl., mit einer in etwa konzentrisch zu einer annähernd kreisbahn- und/oder kreissegmentförmigen Innenmantelfläche (16) eines Gehäuses (10) rotierenden, mittels eines Antriebsmotors angetriebenen Förderscheibe (18), die wenigstens einen Absatz oder eine Aussparung (20) an ihrem Umfang zur Aufnahme wenigstens eines zu separierenden Kornes (14) über mindestens einen Umlauf der Förderscheibe (18) aufweist, wobei der wenigstens eine Absatz oder die wenigstens eine Aussparung (20) in Zusammenwirkung mit einer nutförmigen und/oder schrägen Konturierung der Innenmantelfläche (16) eine Fördertasche zur Förderung eines Korns (14) oder mehrerer Körner (14) in Richtung zu einer sich ungefähr tangential an die Innenmantelfläche (16) anschließenden Auslassöffnung bildet, **dadurch gekennzeichnet, dass** die mit dem Antriebsmotor (40) drehfest verbundene Förderscheibe (18) zur Variation eines axialen Abstandes (50) zur Innenmantelfläche (16) und/oder einer Breite der Fördertasche (20) in axialer Richtung (44) des Antriebsmotors (40) verstellbar ist, wobei der Antriebsmotor (40) innerhalb des Gehäuses (10) entlang seiner Rotationsachse bzw. in axialer Richtung (44) zu seiner Drehachse verstellbar oder verschiebbar ist.

2. Dosieraggregat nach Anspruch 1, bei dem der Antriebsmotor (40) motorisch oder manuell in seiner Position verstellbar ist.

3. Dosieraggregat nach einem der Ansprüche 1 oder 2, bei dem eine Verstelleinheit für die axiale Verstellung der Position des Antriebsmotors (40) im Gehäuse (10) eine Selbsthemmung aufweist.

4. Dosieraggregat nach Anspruch 3, bei dem die Verstelleinheit einen Spindelantrieb umfasst.

5. Dosieraggregat nach einem der Ansprüche 1 bis 4, bei dem mehrere gleichartige Dosieraggregate (12) mit einer zentralen Steuereinheit gekoppelt und unabhängig voneinander oder gemeinsam verstellbar sind.

6. Dosieraggregat nach einem der Ansprüche 1 bis 5, bei dem wenigstens ein Absatz oder die wenigstens eine Aussparung (20) am Außenumfang der Förderscheibe (18) in ihrem Abstand zu einer entsprechenden nutförmigen Gegenfläche an der Innenmantelfläche (16) des Gehäuses (10) verstellbar ist.

7. Dosieraggregat nach Anspruch 6, bei dem wenigstens ein Absatz oder die wenigstens eine Aussparung (20) an parallelen Flächen und/oder über einen definierten Winkel und/oder an einer schrägen Fläche einstellbar ist.

## Claims

1. A metering unit (12) for granular material such as seeds (14), fertilizer, or the like, with a conveyor disk (18) driven by a drive motor and rotating approximately concentrically to an inner cover surface (16) of a housing (10), said inner cover surface taking approximately the form of a circular path and/or of a circle segment, said conveyor disk having at least one shoulder or at least one recess (20) formed at its periphery for the reception of at least one grain (14) to be separated through at least one rotation of said conveyor disk (18), wherein, in the interaction with a groove-shaped and/or slanted profile of the inner cover surface (16), the at least one shoulder or the at least one recess (20) forms a conveyor pocket for conveying one grain (14) or a plurality of grains (14) in a direction toward an outlet opening extending approximately tangentially to said inner cover surface, **characterized in that** the conveyor disk (18), which is rotationally fixedly connected with the drive motor (40), is adjustable in an axial direction (44) of said drive motor (40) for varying an axial distance (50) to said inner cover surface (16) and/or a width of said conveyor pocket (20), wherein the drive motor (40) is adjustable or shiftable within said housing (10) along its rotational axis and/or accordingly in an axial direction (44) to its axis of rotation.

2. The metering unit as recited in claim 1, in which the drive motor (40) is adjustable in its position by motor or manually.

3. The metering unit as recited in one of claims 1 or 2, in which an adjustment unit for the axial adjustment of the position of the drive motor (40) in the housing has a self-locking effect.

4. The metering unit as recited in claim 3, in which the adjustment unit comprises a spindle drive.

5. The metering unit as recited in one of claims 1 to 4, in which a plurality of similar metering units (12) are coupled with a central control unit and are adjustable independently of each other or together.

6. The metering unit as recited in one of claims 1 to 5, in which at least one shoulder or the at least one recess (20) at the outer periphery of the conveyor disk (18) is adjustable in its spacing to a corresponding groove-shaped opposing surface of the inner cover surface of the housing (10).

7. The metering unit as recited in claim 6, in which at least one shoulder or the at least one recess (20) is adjustable at parallel surfaces and/or via a defined angle and/or at a slanted surface.

## Revendications

1. Groupe de dosage (12) pour matières granulaires telles que graines (14), engrais ou similaires, comprenant un disque transporteur (18) qui tourne de manière à peu près concentrique par rapport à une surface latérale intérieure (16) d'un carter (10), approximativement en forme de trajectoire circulaire et/ou de segment de cercle, et est entraîné au moyen d'un moteur d'entraînement et qui présente au moins un gradin ou un évidement (20) sur sa circonférence destiné à recevoir au moins un grain à séparer (14) sur au moins une rotation du disque transporteur (18), dans lequel ledit au moins un gradin ou ledit au moins un évidement (20) forme, en coopération avec un contour en forme de rainure et/ou oblique de la surface latérale intérieure (16), une poche de transport pour transporter un grain (14) ou une pluralité de grains (14) en direction d'une ouverture de sortie qui est contiguë de manière à peu près tangentielle à ladite surface latérale intérieure (16), **caractérisé par le fait que**, pour faire varier une distance axiale (50) par rapport à la surface latérale intérieure (16) et/ou une largeur de la poche de transport (20), le disque transporteur (18) solidaire en rotation du moteur d'entraînement (40) est réglable dans la direction axiale (44) du moteur d'entraînement (40), dans lequel le moteur d'entraînement (40) est réglable ou déplaçable à l'intérieur du carter (10) suivant son axe de rotation ou bien dans la direction axiale (44) par rapport à son axe de rotation.

2. Groupe de dosage selon la revendication 1, dans lequel le moteur d'entraînement (40) est réglable en position par moteur ou manuellement.

3. Groupe de dosage selon l'une quelconque des revendications 1 ou 2, dans lequel une unité de réglage pour le réglage axial de la position du moteur d'entraînement (40) à l'intérieur du carter (10) présente un auto-blocage.

4. Groupe de dosage selon la revendication 3, dans lequel ladite unité de réglage comprend un entraînement à broche.

5. Groupe de dosage selon l'une quelconque des revendications 1 à 4, dans lequel plusieurs groupes de dosage (12) similaires sont couplés à une unité centrale de commande et sont réglables indépendamment les uns des autres ou en commun.

6. Groupe de dosage selon l'une quelconque des revendications 1 à 5, dans lequel au moins un gradin ou ledit au moins un évidement (20) sur la circonférence extérieure du disque transporteur (18) est réglable en distance par rapport à une contre-surface correspondante en forme de rainure sur la surface latérale intérieure (16) du carter (10).

7. Groupe de dosage selon la revendication 6, dans lequel au moins un gradin ou ledit au moins un évidement (20) est réglable sur des surfaces parallèles et/ou sur un angle défini et/ou sur une surface oblique.
